# EUROPÄISCHE PATENTSCHRIFT

(11) **EP 4 323 660 B1**
(45) Veröffentlichungstag und Bekanntmachung des Hinweises auf die Patenterteilung: **11.06.2025**
(21) Anmeldenummer: 22721764.3
(22) Anmeldetag: 08.04.2022
(51) Int. Cl.: F16C 29/00

(54) **STATISCH OPTIMIERTES HYBRID-ROLLENLAGER**
STATICALLY OPTIMIZED HYBRID ROLLER BEARING
ROULEMENT À ROULEAUX HYBRIDE À OPTIMISATION STATIQUE

(30) Priorität: 12.04.2021 DE 202021101951 U
(43) Veröffentlichungstag der Anmeldung: 21.02.2024
(73) Patentinhaber: igus GmbH, 51147 Köln (DE)
(72) Erfinder: MOSHAMMER, Horst, 53545 Linz am Rhein (DE)
(74) Vertreter: Lippert Stachow Patentanwälte Rechtsanwälte
(86) Internationale Anmeldenummer: PCT/EP2022/059521
(87) Internationale Veröffentlichungsnummer: WO 2022/218881

(56) Entgegenhaltungen:
- DE-A1- 3 224 282
- JP-A- H05 149 334
- US-A- 4 714 354
- US-A- 5 281 029
- US-A1- 2015 176 643

## Beschreibung

Die Erfindung betrifft ein Lager gemäß dem Oberbegriff von Anspruch 1 sowie eine Lageranordnung mit einem solchen Lager und die Verwendung eines solchen Lagers.

Gattungsgemäße Lager werden für eine in einer Längsrichtung gleitende Lagerung, insbesondere schmiermittelfreien Lagerung, von Arbeitsvorrichtungen an einer Schiene verwendet. Gattungsgemäße Lager beruhen dabei auf einem Hybrid-Prinzip, bei dem die Lagerung sowohl rollen- als auch gleitelementbasiert ist. Ein solches Lager weist ein Gehäuse auf, in dem ein in Längsrichtung durch das Gehäuse hindurch verlaufender Aufnahmekanal vorgesehen ist. Ferner weist ein solches Lager sowohl zumindest eine Rolle als auch zumindest ein Gleitelement auf. Die Rolle ist in dem Gehäuse mit Bezug auf eine senkrecht zur Längsrichtung verlaufende Rollenachse drehbar gelagert. Bei einer bestimmungsgemäßen Verwendung des Lagers ist ein nach Art eines Zylinders ausgebildeter Führungsabschnitt einer Schiene in dem Aufnahmekanal aufgenommen und liegt an einer Lauffläche der Rolle an, und das zumindest eine Gleitelement umschließt den Führungsabschnitt über einen Winkelbereich hinweg von über 200°, insbesondere von über 220°. Bei einer bestimmungsgemäßen Verwendung ist eine Arbeitsvorrichtung an dem Lager so angeordnet, dass die Rolle die Hauptlast auf den Führungsabschnitt überträgt und bei einer Verschiebung des Lagers relativ zum Führungsabschnitt in Längsrichtung an dem Führungsabschnitt entlangrollt, wohingegen das Gleitelement in Längsrichtung versetzt zu der Rolle vorgesehen ist, damit bei einer Querbelastung, d. h. einer Belastung senkrecht zur Hauptlastrichtung und senkrecht zur Längsrichtung, auf das Lager relativ zum Führungsabschnitt der Schiene das Gleitelement bei einer Längsverschiebung des Lagers relativ zum Führungsabschnitt durch diese Querbelastung an den Führungsabschnitt gepresst an diesem entlanggleitet. Gattungsgemäße Lager sind besonders für per Hand in Längsrichtung zu verschiebende Arbeitsvorrichtungen geeignet, beispielsweise in der Kameratechnik, bei Werkzeugmaschinentüren oder bei Tafeln, da solche Lager dank der bei ihnen verwendeten Hybridtechnik zum einen große Lasten mit sehr wenig Reibung an einer Schiene entlang tragen können und zum anderen bei einer insbesondere manuellen Verschiebung der Arbeitsvorrichtung und somit des Lagers auftretende Querkräfte durch das verwendete Gleitelement aufgefangen werden und somit ohne wesentliche Geräuschentwicklung und ohne wesentliche Reibung eine Verschiebung der an dem Lager befestigten Arbeitsvorrichtung entlang der Schiene erfolgen kann.

Bei gattungsgemäßen Lagern sind die eingesetzte Rolle und das eingesetzte Gleitelement so aufeinander abgestimmt in der Durchführung des Gehäuses angeordnet, dass bei einer Belastung des Lagers entlang Hauptlastrichtung, d. h. bei einer Belastung senkrecht zur Rollenachse, das Gleitelement mit einer möglichst geringen Kontaktfläche an dem Führungsabschnitt anliegt. Einem solchen Lager sind jedoch bei der Belastung in Hauptlastrichtung Grenzen gesetzt, einerseits durch das Material des Gehäuses und der Rolle sowie, bei dem Vorsehen einer separaten Rollenachse, die an dem Gehäuse befestigt ist und auf der die Rolle drehbar gelagert ist, durch das Material der Rollenachse. Bei einer zu großen Belastung in Hauptlastrichtung treten erhebliche Verschleißerscheinungen und insbesondere auch eine erhöhte Reibung auf. Entsprechend sind solche Lager bestimmungsgemäß nur bis zu einer durch den Hersteller vorgegebenen statischen Tragfähigkeit, bezogen auf eine Traglast in Hauptlastrichtung, und einer dynamischen Tragfähigkeit, bezogen auf eine Traglast in Hauptlastrichtung, einsetzbar, wobei die dynamische Tragfähigkeit in Abhängigkeit von der beabsichtigten Gesamtlaufstrecke angegeben ist. Bei der in Längsrichtung gleitenden Lagerung von Arbeitsvorrichtungen über solche Lager, deren Last so groß ist, dass die statische Tragfähigkeit überschritten wird, ist das Vorsehen einer Vielzahl an Lagern erforderlich, die entlang der Längsrichtung hintereinander angeordnet werden und somit mit Bezug auf die Hauptlastrichtung parallel geschaltet sind und somit gemeinsam die von der Arbeitsvorrichtung aufgebrachte Last tragen. Dabei hat sich jedoch als problematisch herausgestellt, dass eine solche Mehrzahl an Lagern einer komplizierten Installation bedarf, damit es nicht zu einer ungewollt großen Reibung zwischen dem Führungsabschnitt der Schiene und den Lagern bzw. einem zu großen Verschleiß der Lager, insbesondere ihrer Rollen kommt. Denn die Lager müssen mit den Längsachsen ihrer Durchführungen präzise zueinander fluchtend ausgerichtet werden, da jedes Lager die Position des Führungsabschnitts senkrecht zur Längsrichtung eindeutig festlegt, so dass jedwede Abweichung der Ausrichtung der Längsachsen der verschiedenen Lager voneinander zu einer überbestimmten Positionierung des Führungsabschnitts durch die sich aus den Lagern ergebende Lageranordnung führt und mit entsprechenden Reibverlusten bzw. Belastungen einhergeht.

Ein Lager gemäß Oberbegriff von Anspruch 1 ist aus der US 4 714 354 A bekannt. Weiterer Stand der Technik ist aus den Veröffentlichungen JP H05 149334 A,US 2015/176643 A1, US 5 281 029 A und DE 32 24 282 A1 bekannt.

Der vorliegenden Erfindung liegt die Aufgabe zugrunde, ein Lager und/oder eine Lageranordnung und/oder eine Verwendung eines Lagers bereitzustellen, durch das bzw. die zumindest ein Nachteil gattungsgemäßer Lager zumindest teilweise behoben ist.

Als eine Lösung der der vorliegenden Erfindung zugrundeliegenden Aufgabe schlägt die Erfindung ein Lager mit den Merkmalen gemäß Anspruch 1 vor. Das erfindungsgemäße Lager ist dazu geeignet, einen sich mit seiner Zylinderachse in Längsrichtung erstreckenden zylindrischen Führungsabschnitt einer Schiene in der Längsrichtung verschiebbar geführt zu lagern. Das Lager ist rollen- und gleitelementbasiert, so dass die Lagerung sowohl auf zumindest einer Rolle und zumindest einem Gleitelement erfolgt. Das Lager umfasst ein Gehäuse, das eine Durchführung aufweist, die entlang einer Längsachse, die sich in Längsrichtung erstreckt, durch das Gehäuse hindurch verläuft. In der Durchführung ist ein Aufnahmekanal zur Aufnahme des Führungsabschnitts der Schiene ausgebildet. Bei einer bestimmungsgemäßen Verwendung des Lagers ist der Führungsabschnitt mit seiner Zylinderachse fluchtend entlang der Längsachse der Durchführung in dem Aufnahmekanal angeordnet. Der Aufnahmekanal ist senkrecht zur Längsrichtung zumindest teilweise, insbesondere über einen Winkelbereich von mindestens 200°, insbesondere mindestens 220°, insbesondere mindestens 240°, insbesondere mindestens 260° geschlossen, bevorzugt ununterbrochen geschlossen. Dieses Umschließen liegt bevorzugt über mindestens 50%, insbesondere mindestens 80% der Erstreckungslänge der Durchführung entlang ihrer Längsachse vor. Der Aufnahmekanal liegt vollständig innerhalb der Durchführung. Der Aufnahmekanal kann beispielsweise abschnittsweise durch die Durchführung selbst in seiner Erstreckung senkrecht zur Längsrichtung begrenzt sein, in einigen Ausführungen durch in der Durchführung angeordnete, d. h. zumindest sich in die Durchführung hinein erstreckende Elemente des Lagers senkrecht zur Längsrichtung begrenzt sein, beispielsweise durch in der Durchführung angeordnete Gleitelemente und Rollen. Indem die Durchführung in Längsrichtung durch das Gehäuse hindurch verläuft, kann der zylindrische Führungsabschnitt der Schiene in dem in der Durchführung angeordneten Aufnahmekanal angeordnet werden und bei einer solchen Anordnung eines solchen Führungsabschnitts, dessen Erstreckungslänge in Längsrichtung mindestens das Fünffache, insbesondere mindestens das Zehnfache der Erstreckungslänge des Gehäuses in Längsrichtung beträgt, kann das Lager in Längsrichtung an dem Führungsabschnitt entlang verschoben werden, während dieser in dem Aufnahmekanal angeordnet ist.

Gemäß der vorgeschlagenen Lösung weist das Lager zwei in Längsrichtung voneinander beabstandete Rollen auf, die jeweils um eine senkrecht zur Längsrichtung verlaufende Rollenachse in dem Gehäuse drehbar gelagert sind und mit ihren Laufflächen den Aufnahmekanal jeweils in einer senkrecht zu ihrer Rollenachse verlaufenden Transversalrichtung begrenzen. Jede Rolle ist somit so in dem Gehäuse gelagert, dass sie um eine ihr zugeordnete Rollenachse drehbar ist. Dies kann beispielsweise durch eine am Umfang der jeweiligen Rolle ansetzende Lagerung erfolgen und somit an einer Lagerung an ihrer Lauffläche außerhalb des Aufnahmekanals. Bevorzugt erfolgt dies jedoch über eine mit dem Gehäuse fest verbundene oder in das Gehäuse integrierte Rollenachse, die durch das Zentrum der Rolle verläuft und auf der die Rolle drehbar gelagert ist, so dass ihre Lauffläche die Rollenachse umfänglich umschließt. Jede Rolle erstreckt sich mit ihrer Lauffläche, d. h. mit ihrem radialen Ende, zumindest abschnittsweise in die Durchführung hinein, so dass sie den in der Durchführung vorgesehenen Aufnahmekanal senkrecht zur Längsrichtung begrenzt. Bei der bestimmungsgemäßen Verwendung des Lagers liegt der zylindrische Führungsabschnitt in dem Aufnahmekanal und dabei an den Laufflächen der Rollen an. Entsprechend begrenzt jede Rolle den Aufnahmekanal in einer Transversalrichtung, die senkrecht zu ihrer jeweiligen Rollenachse und zu der Längsrichtung verläuft. Jeder Rolle ist somit eine Transversalrichtung eindeutig zugeordnet. Bevorzugt ist sämtlichen Rollen dieselbe Transversalrichtung zugeordnet, so dass die Rollenachsen parallel verlaufen. In manchen Ausführungsformen kann das Lager auch mehr als zwei Rollen aufweisen, beispielsweise ein erstes Paar an Rollen an einer ersten Position in Längsrichtung und ein zweites Paar an Rollen an einer zweiten Position in Längsrichtung, wobei die Rollenachsen der Rollen eines jeden Paars zueinander um einen Winkel um die Längsrichtung verkippt sind, so dass sie bei einer bestimmungsgemäßen Verwendung an zwei um einen entsprechenden Winkel um die Längsachse zueinander versetzten Umfangsabschnitten des Führungsabschnitts anliegen. Bei einer solchen Ausführungsform sind bevorzugt die Rollenachsen von jeweils einer Rolle eines jeden Paars zueinander parallel ausgerichtet. Bevorzugt weisen die Rollenachsen der Rollen eines Paars einen Winkel um die Längsachse von weniger als 120°, insbesondere weniger als 90° auf. Bevorzugt sind in dem Lager nur an zwei Längspositionen jeweils eine Rolle oder ein Rollenpaar vorgesehen, wobei diese Längspositionen wie erläutert in Längsrichtung voneinander beabstandet sind. Das Gehäuse weist ferner in Längsrichtung zwischen den Rollen bzw. zwischen den genannten Positionen der Rollen in Längsrichtung einen senkrecht zur Längsrichtung entlang einer Montageachse durch das Gehäuse durchlaufenden Montagekanal auf. Die Montageachse verläuft somit in einer senkrecht zur Längsrichtung verlaufenden Querrichtung. Der Montagekanal ist geeignet zur Aufnahme eines bevorzugt zylindrischen Montagebolzens dergestalt, dass der Montagebolzen in dem Montagekanal angeordnet ist, sich entlang der Montageachse durch das Gehäuse hindurch erstreckt und in der Aufnahme um die Montageachse drehbar ist, jedoch in seiner Längsposition durch den Montagekanal festgelegt ist. Selbstverständlich kann anstelle eines Montagebolzens in dem Montagekanal auch eine Montagebuchse angeordnet sein, oder in dem Montagekanal kann eine Montagebuchse angeordnet sein, in der wiederum ein Montagebolzen angeordnet ist. Dabei ist die Montagebuchse entsprechend in dem Montagekanal aufgenommen, erstreckt sich entlang der Montageachse durch das Gehäuse und ist um die Montageachse drehbar gelagert, jedoch in ihrer Position in Längsrichtung durch den Montagekanal festgelegt. In der Durchführung sind ferner mehrere, in Längsrichtung voneinander beabstandete und in Längsrichtung zu den Rollen versetzte Gleitelemente angeordnet, die jeweils mit einer ihrer Seiten den Aufnahmekanal senkrecht zur Längsrichtung begrenzen. Durch das Vorsehen von mehreren Gleitelementen, die zu den Rollen in Längsrichtung versetzt angeordnet sind und den Aufnahmekanal begrenzen, kann der Führungsabschnitt bei der bestimmungsgemäßen Verwendung des Lagers an zumindest einem der Gleitelemente zur Anlage kommen, wenn der Führungsabschnitt relativ zum Lager eine Kraft senkrecht zur Längsrichtung erfährt, die eine Kraftkomponente senkrecht zu den Transversalrichtungen der Rollen aufweist, so dass auch in einem solchen Fall eine geräuscharme und reibungsarme, in Längsrichtung verschiebbare Lagerung des Führungsabschnitts in dem Aufnahmekanal gewährleistet ist, da auch dann das Gehäuse nur über zumindest eine Rolle und zumindest ein Gleitelement an dem Führungsabschnitt anliegt, was erfindungsgemäße allgemein vorteilhaft ist.

Das erfindungsgemäße Lager bringt eine Vielzahl an Vorteilen mit sich. Durch die Kombination von zwei in Längsrichtung voneinander beabstandeten Rollen und mehreren in Längsrichtung voneinander beabstandeten und zu den Rollen versetzten Gleitelementen kann auch bei Krafteinwirkungen mit einer Komponente senkrecht zur Längsrichtung und senkrecht zur Transversalrichtung stets eine möglichst reibungsarme Anlage des Führungsabschnitts an dem Lager gewährleistet sein und einem übermäßigen Verschleiß vorgebeugt sein, wodurch eine hohe Lebensdauer des Lagers erreichbar ist. Durch das Vorsehen von zwei Rollen, die in Längsrichtung voneinander beabstandet sind, können beide Rollen eine Last einer an dem Lager befestigten Arbeitsvorrichtung in Hauptlastrichtung aufnehmen. Die Hauptlastrichtung ist bevorzugt parallel zu den Transversalrichtungen der beiden in Längsrichtung voneinander beabstandeten Rollen oder parallel zu der Winkelhalbierenden der Transversalrichtungen der Rollen eines jeweiligen Paars an Rollen, sofern an jeder Längsposition jeweils ein Paar an Rollen vorgesehen ist. Dadurch ist das Lager auch zur Verwendung bei großen Lasten, insbesondere bei einer statischen Tragfähigkeit von über 400 N, insbesondere über 700 N sowie bei einer dynamischen Tragfähigkeit bei einer Gesamtlaufstrecke von 10 km von über 400 N, insbesondere über 700 N geeignet, wobei die Tragfähigkeit auf eine Last entlang der Hauptlastrichtung abstellt. Indem gemäß Erfindung darüber hinaus in Längsrichtung zwischen den Rollen der Montagekanal vorgesehen ist, in dem ein Montagebolzen und/oder eine Montagebuchse drehbar gelagert aufgenommen ist, kann das Lager über einen solchen Montagebolzen bzw. eine solche Montagebuchse an einem Bauelement befestigt werden und bei einer zwischen Führungsabschnitt der Schiene und Lager wirkenden Kraft mit einer Kraftkomponente senkrecht zur Hauptlastrichtung und senkrecht zur Längsrichtung um den Bolzen bzw. die Buchse verdreht werden, während der Führungsabschnitt an zumindest einer Rolle und zumindest einem Gleitelement anliegt. Somit kann einem Verklemmen des Führungsabschnitts in dem Lager vorgebeugt sein. Dies ist insbesondere bei der Verwendung von zwei in Längsrichtung voneinander beabstandeten Lagern vorteilhaft, da diese Lager auch dann, wenn die Längsachsen ihrer Durchführungen nicht vollständig fluchtend zueinander ausgerichtet sind, sich zueinander verdrehen können, indem sie sich um ihren jeweiligen Montagebolzen bzw. ihre jeweilige Montagebuchse verdrehen, so dass auch bei einer solchen Verwendung einem Verklemmen des Führungsabschnitts relativ zu den Lagern vorgebeugt ist. Die Erfindung bezieht sich somit insbesondere auch auf die Verwendung von zwei in Längsrichtung voneinander beabstandeten Lagern als eine Lageranordnung, über die eine Kraft in Hauptlastrichtung von bevorzugt mindestens 800 N, insbesondere mindestens 1000 N, insbesondere mindestens 1500 N bestimmungsgemäß in Längsrichtung gleitend an einer Schiene getragen werden kann. Allgemein bevorzugt liegen die Laufflächen der beiden in Längsrichtung voneinander beabstandeten Rollen jeweils an einer selben Geraden an, die parallel zur Längsachse der Durchführung verläuft und den Aufnahmekanal in einer Richtung senkrecht zur Längsrichtung begrenzt. Bevorzugt erstrecken sich die Gleitelemente mit ihrem Querschnitt senkrecht zur Längsrichtung nach Art eines Kreisbogenabschnitts, durch dessen Zentrum die Längsachse der Durchführung verläuft. Der Kreisbogenabschnitt ist bevorzugt über einen Winkelbereich von mindestens 200°, insbesondere mindestens 220°, insbesondere mindestens 240°, insbesondere mindestens 260° um die Längsachse durchgehend geschlossen.

Allgemein bevorzugt weist das Lager eine in dem Montagekanal drehbar gelagerte Montagebuchse auf. Die Montagebuchse ist bevorzugt zylinderartig ausgebildet und erstreckt sich mit ihrer Zylinderachse entlang der Montageachse. Bevorzugt ist die Montagebuchse dergestalt in dem Montagekanal angeordnet, dass sie in Längsrichtung ein Spiel von weniger als 0,5 mm, insbesondere weniger als 0,2 mm aufweist. Bevorzugt steht die Montagebuchse entlang der Montageachse an zumindest einer Seite über das Gehäuse vor. Dies ermöglicht es, dass die Montagebuchse an ihren Enden positionsfest an einem Bauelement fixiert werden kann, ohne dass hierdurch eine Verdrehbarkeit des Gehäuses relativ zur Montagebuchse eingeschränkt ist.

Bevorzugt weist das Gehäuse ein erstes und ein zweites Gehäuseteil auf, die entlang der Montageachse nebeneinander angeordnet sind und lösbar aneinander fixiert sind. Beide Gehäuseteile bilden gemeinsam den Montagekanal und/oder gemeinsam die Durchführung aus. Durch das Vorsehen von zwei lösbar miteinander verbundenen Gehäuseteilen ist die Herstellung und Montage eines erfindungsgemäßen Lagers besonders vereinfacht.

Besonders bevorzugt ist der Montagekanal in Längsrichtung von beiden Rollen bzw. beiden Längspositionen der zueinander in Längsrichtung versetzt angeordneten Rollen oder Rollenpaaren, gleich weit beabstandet. Dies bringt den besonderen Vorteil mit sich, dass bei jedweder Kraftbelastung senkrecht zur Längsrichtung und senkrecht zur Transversalrichtung der Rollen das Lager gleichmäßig durch eine Drehung um eine in dem Montagekanal angeordnete Montagebuchse bzw. ein in dem Montagekanal angeordneten Montagebolzen verdreht werden kann. Bevorzugt verlaufen Montageachse und Rollenachsen sämtlich senkrecht zur Längsachse, wobei die Montageachse in Längsrichtung von beiden Rollenachsen jeweils gleich weit beabstandet ist. Besonders bevorzugt ist der Montagekanal an einer selben Seite des Aufnahmekanals wie die Rollenachsen angeordnet. Die Rollenachsen und der Montagekanal sind selbstverständlich mit Bezug auf eine Richtung senkrecht zur Längsrichtung außerhalb des Aufnahmekanals angeordnet, bevorzugt mit Bezug auf diese Richtung auf derselben Seite des Aufnahmekanals. Bevorzugt ist jeweils zumindest ein Gleitelement in jeweils einem Längsendabschnitt der Durchführung angeordnet. Die Durchführung weist zwei in Längsrichtung gegenüberliegende Längsendabschnitte auf. Jeder Längsendabschnitt erstreckt sich von dem ihm zugeordneten absoluten Längsende der Durchführung über maximal 30%, insbesondere maximal 20%, insbesondere maximal 10% der Erstreckungslänge der Durchführung in Längsrichtung. Bevorzugt ist jeweils ein Gleitelement ausschließlich innerhalb des jeweiligen Längsendabschnitts angeordnet. Bevorzugt ist der Montagekanal bzw. die Montageachse von den beiden Gleitelementen, die in den beiden Längsendabschnitten der Durchführung angeordnet sind, entlang der Längsrichtung gleich weit beabstandet. Bevorzugt ist das jeweilige Gleitelement, das in dem jeweiligen Längsendabschnitt angeordnet ist, näher an dem ihm zugeordneten absoluten Längsende des Gehäuses angeordnet als die ihm in Längsrichtung am nächsten liegende Rolle. Bevorzugt sind die in den Längsendabschnitten angeordneten Gleitelemente jeweils um denselben Abstand in Längsrichtung von der ihnen in Längsrichtung am nächsten liegenden Rolle beabstandet.

Besonders bevorzugt weisen die Laufflächen der Rollen eine zum Aufnahmekanal gewandte konkave Kontur auf. Durch die konkave Kontur können die Rollen besonders vorteilhaft an dem Führungsabschnitt anliegen und insbesondere zu einer weiteren Führung des Führungsabschnitts beitragen. Besonders bevorzugt weisen die Konturen einen nach Art eines Sphärenabschnitts ausgebildeten Querschnitt senkrecht zur Längsrichtung auf. Dies ist besonders vorteilhaft bei der Ausgestaltung des Führungsabschnitts nach Art eines Zylinders mit rundem oder ovalem Querschnitt.

In einer Ausführungsform weist die Montagebuchse an ihrer Außenseite einen radialen, insbesondere als Flansch ausgebildeten Vorsprung auf. Der Vorsprung erstreckt sich radial und somit senkrecht zur Montageachse. Der Vorsprung ist in einer radialen Erweiterung des Montagekanals angeordnet, die entlang der Montageachse beidseitig innerhalb des Gehäuses begrenzt ist. Bevorzugt ist der Montagekanal nach Art eines Zylinders ausgebildet, der die radiale Erweiterung aufweist. Durch die beidseitige Begrenzung der radialen Erweiterung bildet die radiale Erweiterung Anschläge für den Vorsprung aus, die eine Position des Vorsprungs entlang der Montageachse festlegen. Somit ist durch die Anordnung des Vorsprungs in der radialen Erweiterung des Montagekanals die Position der Montagebuchse relativ zum Gehäuse entlang der Montageachse festgelegt. Besonders bevorzugt ist die radiale Erweiterung des Montagekanals durch jeweils entlang der Montageachse zueinander gewandte Querenden der beiden Gehäuseteile ausgebildet. Die radiale Erweiterung wird somit von beiden Gehäuseteilen gemeinsam ausgebildet. Die Querenden bezeichnen die Enden der Gehäuseteile, mit denen sie entlang der Montageachse zueinander weisen und insbesondere aneinander anliegen. Durch die Ausbildung der radialen Erweiterung durch die beiden Gehäuseteile ist die Herstellbarkeit des Lagers besonders begünstigt. Besonders bevorzugt ist in dem Montagekanal zwischen dem Gehäuse und der Montagebuchse ein insbesondere hohlzylindrisches erstes Gleitteil vorgesehen. Durch das Gleitteil ist eine reibungsarme Verdrehbarkeit der Montagebuchse relativ zum Gehäuse gewährleistet. Bevorzugt weist das erste Gleitteil einen ersten Gleitteilvorsprung auf, mit dem es in einem ersten Abschnitt der radialen Erweiterung des Montagekanals angeordnet ist zur Festlegung einer Position des ersten Gleitteils relativ zum Gehäuse entlang der Montageachse. Bevorzugt ist in dem Montagekanal entlang der Montageachse zu dem ersten Gleitteil versetzt ein zweites Gleitteil vorgesehen, das bevorzugt einen zweiten Gleitteilvorsprung aufweist, mit dem es in einem zweiten Abschnitt der radialen Erweiterung des Montagekanals angeordnet ist zur Festlegung einer Position des zweiten Gleitteils relativ zum Gehäuse entlang der Montageachse. Bevorzugt liegt der Vorsprung der Montagebuchse entlang der Montageachse mit einer ersten Seite an dem ersten Gleitteilvorsprung an und mit einer zweiten, von der ersten abgewandten Seite an dem zweiten Gleitteilvorsprung an. Bevorzugt ist die radiale Erweiterung eine entlang der Montageachse durchgehende radiale Erweiterung, wobei in der radialen Erweiterung die beiden Gleitteilvorsprünge und der Vorsprung der Montagebuchse angeordnet sind. Bevorzugt liegt die Montagebuchse ausschließlich über das zumindest eine Gleitteil und somit nicht unmittelbar an dem Gehäuse an. Besonders bevorzugt ist das erste Gleitteil, insbesondere ausschließlich, in einem von dem ersten Gehäuseteil ausgebildeten ersten Abschnitt des Montagekanals angeordnet. Besonders bevorzugt ist das zweite Gleitteil, insbesondere ausschließlich, in einem von dem zweiten Gehäuseteil ausgebildeten zweiten Abschnitt des Montagekanals angeordnet. Bevorzugt besteht der Montagekanal aus den beiden Abschnitten.

Allgemein bevorzugt umschließen die Gleitelemente die Längsachse der Durchführung mit einem Umschließungswinkel von mindestens 220°, insbesondere mindestens 240°, insbesondere mindestens 260°. Allgemein bevorzugt umschließt die Durchführung die Längsachse senkrecht zur Längsrichtung über einen Winkelbereich von mindestens 220°, insbesondere mindestens 240°, insbesondere mindestens 260° vollständig. Besonders bevorzugt weist die Durchführung an einer senkrecht zur Längsrichtung gewandten Seite eine in Längsrichtung durchgehende Öffnung auf. Bevorzugt weisen die Gleitelemente eine zu der Öffnung der Durchführung fluchtende, in Längsrichtung durchgehende Öffnung auf. Die in der Durchführung und insbesondere den Gleitelementen vorgesehene Öffnung dient dazu, dass ein Steg, über den der zylindrische Führungsabschnitt der Schiene an einem Schienenkörper der Schiene angebunden ist, durch die Öffnung hindurchgleiten kann, während das Lager entlang der Längsrichtung an dem Führungsabschnitt der Schiene gleitend verschoben wird.

Allgemein bevorzugt weisen die Gleitelemente in Längsrichtung verlaufende Rillen auf. Hierdurch kann einer Reiberhöhung durch Verschmutzung vorgebeugt sein, und die Kontaktfläche, über die die Gleitelemente an dem Führungsabschnitt anliegen, kann hierdurch vorteilhaft klein gehalten sein. Allgemein bevorzugt verlaufen die Rollenachsen parallel zur Montageachse. Allgemein bevorzugt sind die Gleitelemente aus einem tribologischen Polymer hergestellt. Bevorzugt sind die Gleitteile aus einem tribologischen Polymer hergestellt. Ein solches tribologisches Polymer ist ein mit Bezug auf Verschleißminderung und Reibminderung optimiertes Polymer. Üblicherweise weist ein solches tribologisches Polymer ein Basispolymer auf, beispielsweise die Thermoplaste Polyethen, Polypropylen, Polyacetal, Polycarbonat, Polyamid, Polyvinylchlorid, Polytetrafluorethen sowie bei den Duroplasten Phenolharze. Diesem Basispolymer sind feinteilige Feststoffschmiermittel, beispielsweise Molybdändisulfid oder Graphit, und/oder Füllstoffe, beispielsweise Kunststoff- oder Textilfasern oder -partikel, beigefügt. Bevorzugt ist das Gehäuse aus einem Metall oder einer Metalllegierung hergestellt, insbesondere durch Druckguss. Bevorzugt weist das Gehäuse und somit die Durchführung eine Erstreckung in Längsrichtung von mindestens 6 cm, insbesondere zwischen 6 cm und 15 cm auf. Bevorzugt weisen die Rollen einen Durchmesser von 10 mm bis 30 mm, insbesondere von 15 mm bis 25 mm auf. Bevorzugt sind die Rollen aus einem Kunststoff hergestellt. Bevorzugt sind die Rollenachsen als separates, in dem Gehäuse fixiertes Stiftelement hergestellt, besonders bevorzugt aus Metall oder einer Metalllegierung. Allgemein bevorzugt ist das Gehäuse aus Aluminimum hergestellt.

Die Erfindung betrifft ferner eine Lageranordnung mit einem erfindungsgemäßen Lager sowie mit einer Schiene, die einen nach Art eines Zylinders ausgebildeten Führungsabschnitt aufweist. Bei der erfindungsgemäßen Lageranordnung ist der Führungsabschnitt in Längsrichtung verschiebbar in der Durchführung des Lagers angeordnet, insbesondere in dem in der Durchführung liegenden Aufnahmekanal des Lagers angeordnet, und liegt senkrecht zur Längsrichtung an beiden Rollen an. Bevorzugt ist der Führungsabschnitt von den Gleitelementen senkrecht zur Längsrichtung um weniger als 1 mm, insbesondere weniger als 0,5 mm, insbesondere weniger als 0,2 mm beabstandet. Besonders bevorzugt weist die Schiene einen Schienenkörper und einen mit dem Schienenkörper verbundenen Steg auf, der mit dem Führungsabschnitt verbunden ist und somit den Führungsabschnitt mit dem Schienenkörper verbindet. Der Steg läuft bevorzugt in Längsrichtung ununterbrochen über die Längserstreckung der Schiene hinweg durch. Der Führungsabschnitt ist bevorzugt nach Art eines Zylinders mit kreisförmigem oder ovalem Querschnitt ausgebildet, an dessen einer Seite der Steg angebracht ist, der den Führungsabschnitt mit dem Schienenkörper verbindet. Bevorzugt ist die Schiene umfassend Schienenkörper, Steg und Führungsabschnitt einstückig hergestellt, insbesondere aus Aluminium hergestellt, insbesondere durch Strangpressen. Besonders bevorzugt umfasst die Lageranordnung ein weiteres erfindungsgemäßes Lager, so dass sie zwei erfindungsgemäße Lager, insbesondere genau zwei erfindungsgemäße Lager umfasst. Die Lager sind in Längsrichtung nebeneinander angeordnet und bevorzugt in Längsrichtung voneinander beabstandet. Der Führungsabschnitt der Schiene ist in den Durchführungen, insbesondere in den Aufnahmekanälen, der beiden Lager angeordnet, und die Lager sind jeweils mittels eines in ihrem jeweiligen Montagekanal angeordneten Montagebolzens und/oder einer in ihrem jeweiligen Montagekanal angeordneten Montagebuchse an einem Bauelement befestigt. Das Bauelement kann beispielsweise ein Maschinenteil sein, beispielsweise das Traggerüst einer Maschine, oder ein Teil eines Gebäudes sein, beispielsweise eine Wand.

Die Erfindung betrifft ferner die Verwendung eines erfindungsgemäßen Lagers, wobei ein Montagebolzen und/oder eine Montagebuchse durch den Kanal geführt wird und relativ zum Gehäuse des Lagers, insbesondere bezogen auf die Längsrichtung und/oder die parallel zur Montageachse verlaufende Querrichtung und/oder eine senkrecht zur Montageachse und zur Längsachse verlaufende Richtung, positionsfest und gleichzeitig um die Montageachse drehbar fixiert wird. Durch die positionsfeste Fixierung ist somit eine Translation relativ zum Gehäuse verhindert, nicht aber eine Rotation. Bevorzugt ist in dem Montagekanal eine Montagebuchse angeordnet, in die ein Montagebolzen eingeführt wird, der an beiden Enden der Montagebuchse an dieser befestigt wird, so dass Montagebolzen und Montagebuchse positionsfest und drehfest miteinander verbunden sind, während das Gehäuse um die Montagebuchse drehbar gelagert ist. Bei der erfindungsgemäßen Verwendung wird ein nach Art eines Zylinders ausgebildeter Führungsabschnitt einer Schiene entlang der Längsrichtung in den Aufnahmekanal an den Rollen anliegend eingeführt unter Drehung der Rollen um ihre Rollenachsen. Besonders bevorzugt wird anschließend das Lager relativ zur Schiene entlang der Längsrichtung verschoben, wobei eine Kraft zwischen Lager und Schiene aufgebracht wird, durch die das Lager um den Montagebolzen und/oder um die Montagebuchse gedreht wird und der Führungsabschnitt an zumindest eines der Gleitelemente gepresst wird und an diesem gepresst anliegend in Längsrichtung entlanggleitet, während er gleichzeitig an zumindest einer der Rollen anliegt und sich diese eine Rolle um ihre Rollenachse dreht. Die Kraft hat bevorzugt eine Kraftkomponente in Längsrichtung und eine Kraftkomponente senkrecht zur Transversalrichtung dieser Rolle.

Die Erfindung wird nachfolgend unter Bezugnahme auf drei Figuren anhand eines Ausführungsbeispiels näher erläutert.

Es zeigen:
- Figur 1:: in verschiedenen schematischen Prinzipdarstellungen verschiedene Ansichten einer Ausführungsform einer erfindungsgemäßen Lageranordnung;
- Figur 2:: in verschiedenen schematischen Prinzipdarstellungen verschiedene Ansichten auf Bestandteile der erfindungsgemäßen Lageranordnung gemäß Figur 1;
- Figur 3:: in einer schematischen Explosionsdarstellung das Lager der erfindungsgemäßen Lageranordnung gemäß Figur 1.

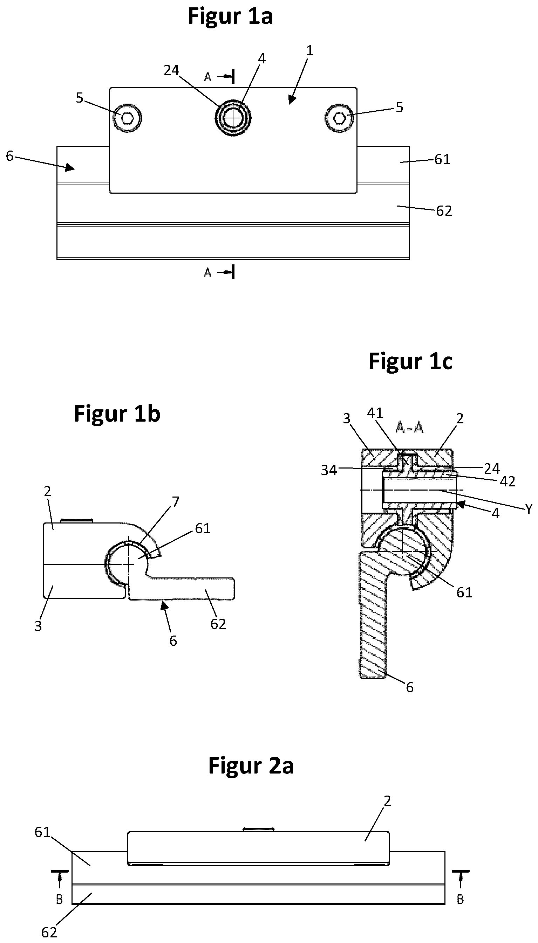

In Figur 1 umfassend die Figuren 1a, 1b und 1c sind verschiedene Ansichten einer Ausführungsform einer erfindungsgemäßen Lageranordnung in verschiedenen schematischen Prinzipdarstellungen dargestellt. Die Lageranordnung umfasst ein Lager 1 und eine Schiene 6. Das Lager 1 umfasst ein erstes Gehäuseteil 2 und ein zweites Gehäuseteil 3. Erstes und zweites Gehäuseteil 2, 3 bilden gemeinsam das Gehäuse des Lagers 1 aus. Das Gehäuse weist eine entlang einer in Längsrichtung verlaufenden Längsachse X durch das Gehäuse verlaufende Durchführung auf. In der Durchführung ist ein nach Art eines Zylinders ausgebildeter Führungsabschnitt 61 der Schiene 6 angeordnet, der über einen Steg mit einem Schienenkörper 62 der Schiene 6 verbunden ist. Die Durchführung mit dem darin aufgenommenen Führungsabschnitt 61 ist aus der Aufsicht entlang der Längsrichtung gemäß Figur 1b sowie aus der Schnittzeichnung senkrecht zur Längsrichtung gemäß Figur 1c zu erkennen. Die Durchführung umschließt die Längsachse X senkrecht zur Längsrichtung über einen Winkelbereich von ca. 260° ununterbrochen. An einer senkrecht zur Längsrichtung gewandten Seite weist die Durchführung eine in Längsrichtung durchgehende Öffnung auf, durch die sich der Steg hindurch erstreckt, über den der Führungsabschnitt 61 mit dem Schienenkörper 62 verbunden ist. Diese Öffnung entspricht dem Winkelbereich, in dem die Durchführung die Längsachse X nicht umschließt. Die Gehäuseteile 2, 3 bilden ferner einen Montagekanal aus, der sich nach Art eines Zylinders entlang einer Montageachse Y erstreckt. In diesem Montagekanal ist eine Montagebuchse 4 angeordnet, die mit Bezug auf die Längsrichtung durch ihre Anordnung in dem Montagekanal positionsfest relativ zu den Gehäuseteilen 2, 3 fixiert ist, jedoch um die Montageachse Y relativ zu den Gehäuseteilen 2, 3 verdrehbar ist. Die Montagebuchse 4 weist einen hohlzylindrischen Mantelteil 42 auf, an dessen radialer Außenseite ein umfänglich umlaufender, als Flansch ausgebildeter Vorsprung 41 ausgebildet ist, was erfindungsgemäß allgemein vorteilhaft ist. Der Montagekanal weist eine entlang der Montageachse Y beidseitig begrenzte radiale Erweiterung auf, in der der Vorsprung 41 der Montagbuchse 4 angeordnet ist, so dass die Montagebuchse 4 in ihrer Position entlang der Montageachse Y relativ zu den Gehäuseteilen 2, 3 festgelegt ist. Ferner sind ein erstes Gleitteil 24 und ein zweites Gleitteil 34 vorgesehen, die jeweils einen Gleitteilvorsprung aufweisen, mit dem sie in die radiale Erweiterung des Montagekanals eingreifen, so dass auch die Gleitteile 24, 34 mit Bezug auf die Montageachse Y positionsfest relativ zu den Gehäuseteilen 2, 3 gehalten sind. Die radiale Erweiterung des Montagekanals ist eine entlang der Montageachse Y durchgehende radiale Erweiterung, in der sowohl der Vorsprung 41 der Montagebuchse 4 als auch die Gleitteilvorsprünge der Gleitteile 24, 34 angeordnet sind. Die beiden Gehäuseteile 2, 3 bilden jeweils einen Abschnitt des Montagekanals aus und an ihren entlang der Montageachse Y zueinander gewandten Querenden jeweils einen Abschnitt der radialen Erweiterung des Montagekanals aus. Die Gehäuseteile 2, 3 sind entlang der Montageachse Y nebeneinander angeordnet und durch Schrauben 5 mit ihren zueinander gewandten Querenden aneinander lösbar fixiert. Durch diesen Aufbau des Lagers 1 kann das Lager 1 besonders einfach zusammengebaut werden und insbesondere auch gewartet werden, beispielsweise zum Austausch von Gleitteilen 24, 34 oder zum Austausch eines in der Durchführung liegenden Gleitelements 7, das sowohl an dem Führungsabschnitt 61 als auch an der Durchführung anliegt.

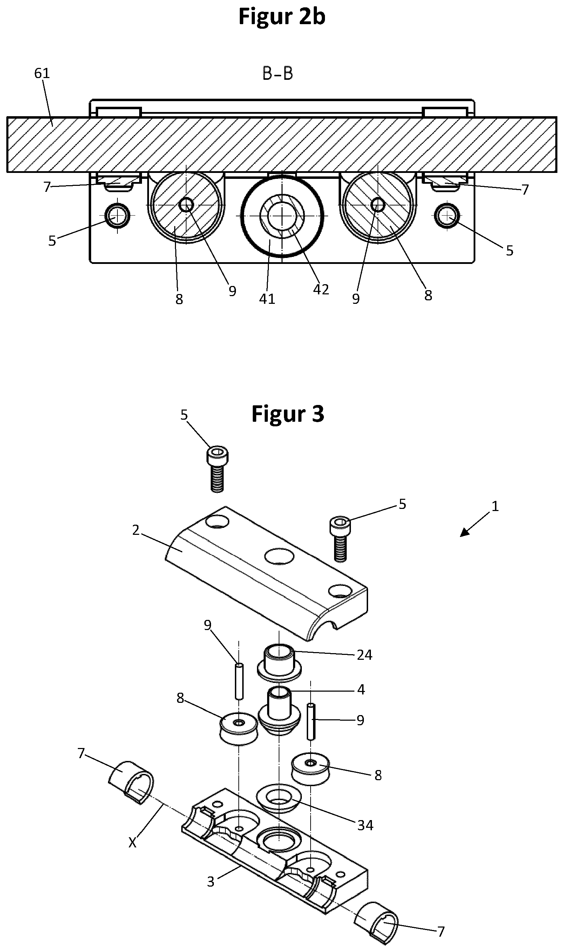

In Figur 2 umfassend die Figuren 2a und 2b sind verschiedene Ansichten auf Bestandteile der Lageranordnung gemäß Figur 1 in verschiedenen Prinzipdarstellungen schematisch dargestellt. Figur 2a zeigt die Lageranordnung gemäß Figur 1 ohne das zweite Gehäuseteil 3. Figur 2b zeigt eine Ansicht auf einen Schnitt B-B senkrecht zur Montageachse Y der in Figur 2a gezeigten Baugruppe. Ferner ist in Figur 3 das Lager 1 der Lageranordnung gemäß Figur 1 in einer Explosionszeichnung schematisch dargestellt. Die Ausgestaltung und Funktionsweise des Lagers 1 wird insbesondere aus der Zusammenschau der Figuren 2a, 2b und 3 ersichtlich. Das Lager 1 weist zwei Rollen 8 auf, die jeweils um eine Rollenachse 9 verdrehbar in dem Gehäuse gelagert sind. Die Rollenachse 9 beider Rollen 8 verläuft jeweils parallel zur Montageachse Y und ist in beiden Gehäuseteilen 2, 3 jeweils in einem Sackloch aufgenommen. Bei der beschriebenen Ausführungsform sind die Rollenachsen 9 als separate, in dem Gehäuse fixierte Stiftelemente ausgebildet. Beide Rollenachsen 9 und somit auch beide Rollen 8 sind von dem Montagekanal um einen selben Abstand entlang der Längsachse X beabstandet und liegen auf, bezogen auf die Längsrichtung, zwei unterschiedlichen Seiten des Montagekanals und somit auch der Montagebuchse 4. In jedem Längsendabschnitt der Durchführung ist jeweils ein Gleitelement 7 vorgesehen, das die Längsachse X mit einem Umschließungswinkel von ca. 260° umschließt. Bei der in Figur 2b gezeigten bestimmungsgemäßen Verwendung liegt der zylindrische Führungsabschnitt 61 der Schiene 6 sowohl an den Laufflächen beider Rollen 8 als auch an den Gleitelementen 7 an. Dies ist erfindungsgemäß allgemein vorteilhaft. Die Gleitelemente 7 und die Rollen 8 begrenzen den in der Durchführung ausgebildeten Aufnahmekanal, in dem der Führungsabschnitt 61 aufgenommen ist, in einer Transversalrichtung, die senkrecht auf der Längsachse X und auf der Montageachse Y steht. Diese Transversalrichtung entspricht der Hauptlastrichtung des Lagers 1, wobei die Transversalrichtung senkrecht auf den Rollenachsen 9 und der Montageachse Y steht, die zueinander parallel verlaufen und senkrecht zur Längsachse X verlaufen, was erfindungsgemäß allgemein vorteilhaft ist.

Aus der Zusammenschau der Figuren ist ferner zu erkennen, dass die Montagebuchse 4 ausschließlich über Gleitteile 24, 34 und somit nicht unmittelbar an den Gehäuseteilen 2, 3 anliegt. Hierdurch ist eine möglichst reibungsarme Verdrehbarkeit der Montagebuchse 4 relativ zu den Gehäuseteilen 2, 3 gewährleistet. Durch das Vorsehen der Gleitelemente 7 und der Rollen 8 ist ferner eine besonders belastbare und reibungsarme, entlang der Längsachse X verschiebbare Lagerung des Führungsabschnitts 61 der Schiene im Lager 1 gewährleistet. Die Gleitteile 24, 34 und die Gleitelemente 7 sind dabei jeweils aus tribologischem Polymer hergestellt. Aus den Figuren 2b und 3 ist ferner ersichtlich, dass die beiden Gehäuseteile 2, 3 für jede der Rollen 8 jeweils gemeinsam eine Rollenkavität ausbilden, in der die jeweilige Rolle 8 aufgenommen ist. Jedes der Gehäuseteile 2, 3 bildet eine Begrenzung der jeweiligen Rollenkavität entlang der Montageachse Y aus, so dass die Rolle 8 in der jeweiligen Rollenkavität in ihrer Position relativ zum Gehäuse mit Bezug auf die Montageachse Y festgelegt ist. Besonders bevorzugt, und in dem vorliegenden Ausführungsbeispiel realisiert, sind die Rollen 8 mit mehr als 50%, bevorzugt mehr als 70% ihrer Laufflächen in der jeweiligen Rollenkavität aufgenommen und erstrecken sich mit ihren Laufflächen aus der jeweiligen Rollenkavität hinaus in die Durchführung des Gehäuses hinein. Das Vorsehen entsprechender Rollenkavitäten ist erfindungsgemäß allgemein vorteilhaft.

### Bezugszeichenliste

- 1: Lager
- 2: erstes Gehäuseteil
- 3: zweites Gehäuseteil
- 4: Montagebuchse
- 5: Schraube
- 6: Schiene
- 7: Gleitelement
- 8: Rolle
- 9: Rollenachse
- 24: erstes Gleitteil
- 34: zweites Gleitteil
- 41: Vorsprung
- 61: Führungsabschnitt
- 62: Schienenkörper
- X: Längsachse
- Y: Montageachse

## Patentansprüche

1. Lager (1) zur in einer Längsrichtung verschiebbar geführten, rollen- und gleitelementbasierten Lagerung eines sich mit seiner Zylinderachse in Längsrichtung erstreckenden zylindrischen Führungsabschnitts (61) einer Schiene (6), das Lager (1) umfassend ein Gehäuse, das eine sich entlang einer in Längsrichtung verlaufenden Längsachse (X) durch das Gehäuse verlaufende Durchführung aufweist, in der ein Aufnahmekanal zur Aufnahme des Führungsabschnitts (61) der Schiene (6) ausgebildet ist, wobei i) das Lager (1) zwei in Längsrichtung voneinander beabstandete Rollen (8) aufweist, die jeweils um eine senkrecht zur Längsrichtung verlaufende Rollenachse (9) in dem Gehäuse drehbar gelagert sind und mit ihren Laufflächen den Aufnahmekanal jeweils in einer senkrecht zu ihrer Rollenachse (9) verlaufenden Transversalrichtung begrenzen,
**dadurch gekennzeichnet, dass**
ii) das Gehäuse in Längsrichtung zwischen den Rollen (8) einen senkrecht zur Längsrichtung entlang einer Montageachse (Y) durch das Gehäuse durchlaufenden Montagekanal aufweist zur um die Montageachse (Y) drehbaren Aufnahme eines Montagebolzens und/oder einer Montagebuchse, und
iii) in der Durchführung in Längsrichtung voneinander beabstandet und zu den Rollen (8) versetzt mehrere Gleitelemente (7) angeordnet sind, die jeweils mit einer ihrer Seiten den Aufnahmekanal senkrecht zur Längsrichtung begrenzen.

2. Lager (1) nach Anspruch 1,
**dadurch gekennzeichnet, dass**
das Lager (1) eine in dem Montagekanal drehbar gelagerte Montagebuchse (4) aufweist, die insbesondere entlang der Montageachse (Y) an zumindest einer Seite über das Gehäuse vorsteht.

3. Lager (1) nach einem der vorangehenden Ansprüche,
**dadurch gekennzeichnet, dass**
das Gehäuse ein erstes und ein zweites Gehäuseteil (2, 3) umfasst, die entlang der Montageachse (Y) nebeneinander angeordnet sind und lösbar aneinander fixiert sind.

4. Lager (1) nach einem der vorangehenden Ansprüche,
**dadurch gekennzeichnet, dass**
der Montagekanal in Längsrichtung von beiden Rollen (8) gleich weit beabstandet ist und insbesondere an einer selben Seite des Aufnahmekanals wie die Rollenachsen (9) angeordnet ist.

5. Lager (1) nach einem der vorangehenden Ansprüche,
**dadurch gekennzeichnet, dass**
jeweils zumindest ein Gleitelement (7) in einem Längsendabschnitt der Durchführung angeordnet ist und insbesondere näher an einem ihm zugeordneten absoluten Längsende des Gehäuses angeordnet ist als die ihm in Längsrichtung am nächsten liegende Rolle (8).

6. Lager (1) nach einem der vorangehenden Ansprüche,
**dadurch gekennzeichnet, dass**
die Laufflächen der Rollen (8) eine zum Aufnahmekanal gewandte konkave Kontur aufweisen, insbesondere einen nach Art eines Sphärenabschnitts ausgebildeten Querschnitt senkrecht zur Längsrichtung aufweisen.

7. Lager (1) nach einem der Ansprüche 2 bis 6,
**dadurch gekennzeichnet, dass**
die Montagebuchse (4) an ihrer Außenseite einen radialen, insbesondere als Flansch ausgebildeten Vorsprung (41) aufweist, der in einer entlang der Montageachse (Y) beidseitig innerhalb des Gehäuses begrenzten radialen Erweiterung des Montagekanals angeordnet ist zur Festlegung einer Position der Montagebuchse (4) relativ zum Gehäuse entlang der Montageachse (Y), wobei insbesondere die Erweiterung des Montagekanals durch jeweils entlang der Montageachse (Y) zueinander gewandte Querenden der beiden Gehäuseteile (2, 3) gebildet ist.

8. Lager (1) nach einem der Ansprüche 2 bis 7,
**dadurch gekennzeichnet, dass**
in dem Montagekanal zwischen dem Gehäuse und der Montagebuchse (4) ein insbesondere hohlzylindrisches erstes Gleitteil (24) vorgesehen ist, wobei insbesondere das erste Gleitteil (24) einen ersten Gleitteilvorsprung aufweist, mit dem es in einem ersten Abschnitt der Erweiterung des Montagekanals angeordnet ist zur Festlegung einer Position des ersten Gleitteils (24) relativ zum Gehäuse entlang der Montageachse (Y), wobei insbesondere in dem Montagekanal entlang der Montageachse (Y) zu dem ersten Gleitteil (24) versetzt ein zweites Gleitteil (34) vorgesehen ist, das insbesondere einen zweiten Gleitteilvorsprung aufweist, mit dem es in einem zweiten Abschnitt der Erweiterung des Montagekanals angeordnet ist zur Festlegung einer Position des zweiten Gleitteils (34) relativ zum Gehäuse entlang der Montageachse (Y).

9. Lager (1) nach den Ansprüchen 3 und 8,
**dadurch gekennzeichnet, dass**
das erste Gleitteil (24) in einem von dem ersten Gehäuseteil (2) ausgebildeten ersten Abschnitt des Montagekanals angeordnet ist und das zweite Gleitteil (34) in einem von dem zweiten Gehäuseteil (3) ausgebildeten zweiten Abschnitt des Montagekanals angeordnet ist.

10. Lager (1) nach einem der vorangehenden Ansprüche,
**dadurch gekennzeichnet, dass**
die Gleitelemente (7) die Längsachse der Durchführung mit einem Umschließungswinkel von mindestens 220°, insbesondere mindestens 240° umschließen.

11. Lager (1) nach einem der vorangehenden Ansprüche,
**dadurch gekennzeichnet, dass**
die Durchführung die Längsachse (X) senkrecht zur Längsrichtung über einen Winkelbereich von mindestens 220°, insbesondere mindestens 240° vollständig umschließt und an einer senkrecht zur Längsrichtung gewandten Seite eine in Längsrichtung durchgehende Öffnung aufweist.

12. Lager (1) nach einem der vorangehenden Ansprüche,
**dadurch gekennzeichnet, dass**
die Gleitelemente (7) in Längsrichtung verlaufende Rillen aufweisen.

13. Lager (1) nach einem der vorangehenden Ansprüche,
**dadurch gekennzeichnet, dass**
die Rollenachsen (9) parallel zur Montageachse (Y) verlaufen.

14. Lager nach einem der vorangehenden Ansprüche,
**dadurch gekennzeichnet, dass**
die Gleitelemente (7) aus einem tribologischen Polymer hergestellt sind und/oder das Gehäuse aus einem Metall oder einer Metalllegierung, insbesondere durch Druckguss, hergestellt ist.

15. Lageranordnung umfassend ein Lager (1) nach einem der vorangehenden Ansprüche sowie eine Schiene mit einem nach Art eines Zylinders ausgebildeten Führungsabschnitt (61), wobei der Führungsabschnitt (61) in Längsrichtung verschiebbar in der Durchführung des Lagers (1) angeordnet ist und senkrecht zur Längsrichtung an beiden Rollen (8) anliegt und von den Gleitelementen (7) senkrecht zur Längsrichtung um weniger als 0,5 mm, insbesondere weniger als 0,2 mm beabstandet ist.

16. Lageranordnung nach Anspruch 15 umfassend ein weiteres Lager (1) nach einem der Ansprüche 1 bis 14, wobei die Lager (1) in Längsrichtung nebeneinander angeordnet sind und der Führungsabschnitt (61) in den Durchführungen der beiden Lager (1) angeordnet ist und die Lager (1) jeweils mittels eines in ihrem jeweiligen Montagekanal angeordneten Montagebolzens und/oder einer in ihrem jeweiligen Montagekanal angeordneten Montagebuchse (4) an einem Bauelement befestigt sind.

17. Verwendung eines Lagers (1) nach einem der Ansprüche 1 bis 14, wobei ein Montagebolzen und/oder eine Montagebuchse (4) durch den Montagekanal geführt wird und relativ zum Gehäuse des Lagers (1) positionsfest und um die Montageachse drehbar fixiert wird, wobei ein nach Art eines Zylinders ausgebildeter Führungsabschnitt (61) einer Schiene entlang der Längsrichtung in den Aufnahmekanal an den Rollen (8) anliegend eingeführt wird unter Drehung der Rollen (8) um die Rollenachsen (9).

18. Verwendung nach Anspruch 17, wobei anschließend das Lager (1) relativ zur Schiene entlang der Längsrichtung verschoben wird und dabei eine Kraft zwischen Lager (1) und Schiene aufgebracht wird, durch die das Lager (1) um den Montagebolzen und/oder die Montagebuchse (4) gedreht wird und der Führungsabschnitt (61) an zumindest eines der Gleitelemente (7) gepresst wird und an diesem gepresst anliegend in Längsrichtung entlanggleitet, während er gleichzeitig an zumindest einer der Rollen (8) anliegt und sich diese zumindest eine Rolle (8) um ihre Rollenachse (9) dreht.

## Claims

1. Bearing (1) for a longitudinally movably guided roller-based and sliding element-based support of a cylindrical guide section (61) of a rail (6) which extends with its cylinder axis in the longitudinal direction, the bearing (1) comprising a housing which has a passage extending through the housing along a longitudinal axis (X) running in the longitudinal direction in which a receiving channel is formed for receiving the guide section (61) of the rail (6), wherein i) the bearing (1) has two rollers (8) spaced apart from each other in the longitudinal direction which are each rotatably mounted in the housing about a roller axis (9) extending perpendicularly to the longitudinal direction and each delimit with their running surfaces the receiving channel in a transverse direction extending perpendicular to their roller axis (9),
**characterized in that**
ii) the housing has a mounting channel in the longitudinal direction between the rollers (8), which channel extends perpendicularly to the longitudinal direction along a mounting axis (Y) and through the housing for receiving a mounting bolt and/or a mounting bushing rotatable about the mounting axis (Y), and
iii) several sliding elements (7) are arranged in the passage at a distance from one another in the longitudinal direction and offset relative to the rollers (8), each of which delimits the receiving channel with one of its sides perpendicular to the longitudinal direction.

2. Bearing (1) according to claim 1,
**characterized in that**
the bearing (1) has a mounting bushing (4) rotatably mounted in the mounting channel, which mounting bushing protrudes beyond the housing on at least one side, in particular along the mounting axis (Y).

3. Bearing (1) according to any one of the preceding claims,
**characterized in that**
the housing comprises a first and a second housing part (2, 3) which are arranged next to each other along the mounting axis (Y) and are detachably fixed to each other.

4. Bearing (1) according to any one of the preceding claims,
**characterized in that**
the mounting channel is equidistant from both rollers (8) in the longitudinal direction and, in particular, is arranged on the same side of the receiving channel as the roller axes (9).

5. Bearing (1) according to any one of the preceding claims,
**characterized in that**
at least one sliding element (7) is arranged in a longitudinal end section of the passage and, in particular, is arranged closer to an absolute longitudinal end of the housing assigned to it than the roller (8) closest to it in the longitudinal direction.

6. Bearing (1) according to any one of the preceding claims,
**characterized in that**
the running surfaces of the rollers (8) have a concave contour facing the receiving channel, in particular a cross-section perpendicular to the longitudinal direction which is designed in the manner of a spherical section.

7. Bearing (1) according to any one of claims 2 to 6,
**characterized in that**
the mounting bushing (4) has a radial projection (41) on its outer side, which projection is designed in particular as a flange that is arranged in a radial expansion which is bounded within the housing on both sides along the mounting axis (Y), for fixing a position of the mounting bushing (4) relative to the housing, wherein, in particular, the expansion of the mounting channel is formed by transverse ends of the two housing parts (2, 3) facing each other along the mounting axis (Y).

8. Bearing (1) according to any one of claims 2 to 7,
**characterized in that**
a first, in particular hollow-cylindrical sliding part (24) is provided in the mounting channel between the housing and the mounting bushing (4), wherein, in particular, the first sliding part (24) has a first sliding part projection with which it is arranged in a first section of the extension of the mounting channel to define a position of the first sliding part (24) relative to the housing along the mounting axis (Y), wherein, in particular, a second sliding part (34) is provided in the mounting channel along the mounting axis (Y) offset from the first sliding part (24), which in particular has a second sliding part projection with which it is arranged in a second section of the extension of the mounting channel to define a position of the second sliding part (34) relative to the housing along the mounting axis (Y).

9. Bearing (1) according to claims 3 and 8,
**characterized in that**
the first sliding part (24) is arranged in a first section of the mounting channel formed by the first housing part (2) and the second sliding part (34) is arranged in a second section of the mounting channel formed by the second housing part (3).

10. Bearing (1) according to any one of the preceding claims,
**characterized in that**
the sliding elements (7) enclose the longitudinal axis of the passage at an enclosing angle of at least 220°, in particular at least 240°.

11. Bearing (1) according to any one of the preceding claims,
**characterized in that**
the passage completely encloses the longitudinal axis (X) perpendicular to the longitudinal direction over an angle range of at least 220°, in particular at least 240°, and has a continuous opening extending in the longitudinal direction on a side facing perpendicular to the longitudinal direction.

12. Bearing (1) according to any one of the preceding claims,
**characterized in that**
the sliding elements (7) have grooves extending in the longitudinal direction.

13. Bearing (1) according to any one of the preceding claims,
**characterized in that**
the roller axes (9) run parallel to the mounting axis (Y).

14. Bearing according to any one of the preceding claims,
**characterized in that**
the sliding elements (7) are made of a tribological polymer and/or the housing is made of a metal or a metal alloy, in particular by die casting.

15. Bearing arrangement comprising a bearing (1) according to one of the preceding claims and a rail with a guide section (61) designed in the manner of a cylinder, wherein the guide section (61) is arranged in the passage of the bearing (1) so as to be displaceable in the longitudinal direction and abuts against both rollers (8) perpendicular to the longitudinal direction and is spaced apart from the sliding elements (7) perpendicular to the longitudinal direction by less than 0.5 mm, in particular less than 0.2 mm.

16. Bearing arrangement according to claim 15, comprising a further bearing (1) according to one of claims 1 to 14, wherein the bearings (1) are arranged next to one another in the longitudinal direction and the guide section (61) is arranged in the passages of the two bearings (1) and the bearings (1) are each fastened to a component by means of a mounting bolt arranged in their respective mounting channel and/or a mounting bushing (4) arranged in their respective mounting channel.

17. Use of a bearing (1) according to any one of claims 1 to 14, wherein a mounting bolt and/or a mounting bushing (4) is guided through the mounting channel and is fixed in position relative to the housing of the bearing (1) and rotatable about the mounting axis, wherein a guide section (61) of a rail, which is designed in the manner of a cylinder, is inserted along the longitudinal direction into the receiving channel while resting against the rollers (8) while the rollers (8) are rotated about the roller axes (9).

18. Use according to claim 17, wherein the bearing (1) is then displaced relative to the rail along the longitudinal direction, thereby applying a force between the bearing (1) and the rail which causes the bearing (1) to rotate about the mounting bolt and/or the mounting bushing (4) and the guide section (61) to be pressed against at least one of the sliding elements (7) and to slide along the latter in the longitudinal direction while pressed against it, while at the same time bearing against at least one of the rollers (8) and this at least one roller (8) rotating about its roller axis (9).

## Revendications

1. Palier (1) pour l'appui déplaçable dans une direction longitudinale à l'aide d'éléments roulants et coulissants d'une section de guidage cylindrique (61) d'un rail (6) s'étendant dans la direction longitudinale avec son axe cylindrique, le palier (1) comprenant un boîtier, qui présente un passage s'étendant à travers le boîtier le long d'un axe longitudinal (X) s'étendant dans la direction longitudinale, dans lequel est formé un canal de réception destiné à recevoir la section de guidage (61) du rail (6), i) le palier (1) comportant deux rouleaux (8) espacés l'un de l'autre dans la direction longitudinale, qui sont montés rotatifs dans le boîtier, chacun autour d'un axe de roulement (9) perpendiculaire à la direction longitudinale, et qui délimitent, par leurs surfaces de roulement, le canal de réception, chacun dans une direction transversale perpendiculaire à leur axe de roulement (9),
**caractérisé en ce que**
ii) le boîtier comporte, dans le sens longitudinal entre les rouleaux (8), un canal de montage s'étendant perpendiculairement au sens longitudinal le long d'un axe de montage (Y) et traversant le boîtier, destiné à recevoir, de manière rotative autour de l'axe de montage (Y), un boulon de montage et/ou une douille de montage, et
iii) plusieurs éléments de glissement (7) sont disposés dans le passage, espacés les uns des autres dans le sens longitudinal et décalés par rapport aux rouleaux (8), lesquels éléments de glissement délimitent chacun, par l'un de leurs côtés, le canal de réception perpendiculairement au sens longitudinal.

2. Palier (1) selon la revendication 1,
**caractérisé en ce que**
le palier (1) comporte une douille de montage (4) montée de manière rotative dans le canal de montage, douille de montage qui fait saillie, notamment le long de l'axe de montage (Y), sur au moins un côté du boîtier.

3. Palier (1) selon l'une quelconque des revendications précédentes,
**caractérisé en ce que**
le boîtier comprend une première et une deuxième partie de boîtier (2, 3) qui sont disposées l'une à côté de l'autre le long de l'axe de montage (Y) et sont fixées l'une à l'autre de manière amovible.

4. Palier (1) selon l'une quelconque des revendications précédentes,
**caractérisé en ce que**
le canal de montage est espacé de manière égale dans le sens longitudinal des deux rouleaux (8) et est notamment disposé du même côté du canal de réception que les axes des rouleaux (9).

5. Palier (1) selon l'une quelconque des revendications précédentes,
**caractérisé en ce que**
au moins un élément coulissant (7) est disposé dans une partie d'extrémité longitudinale du passage et est notamment disposé plus près d'une extrémité longitudinale absolue du boîtier qui lui est associée que le rouleau (8) le plus proche de lui dans le sens longitudinal.

6. Palier (1) selon l'une quelconque des revendications précédentes,
**caractérisé en ce que**
les surfaces de roulement des rouleaux (8) présentent un contour concave tourné vers le canal de réception, en particulier une section transversale perpendiculaire à la direction longitudinale, conçue à la manière d'une section sphérique.

7. Palier (1) selon l'une quelconque des revendications 2 à 6,
**caractérisé en ce que**
la douille de montage (4) présente sur sa face extérieure une saillie radiale (41), en particulier sous forme de bride, qui est disposée dans un élargissement radial du canal de montage, délimité le long de l'axe de montage (Y) des deux côtés à l'intérieur du boîtier, pour fixer une position de la douille de montage (4) par rapport au boîtier le long de l'axe de montage (Y), l'élargissement du canal de montage étant notamment formé par les extrémités transversales des deux parties de boîtier (2, 3) tournées l'une vers l'autre le long de l'axe de montage (Y).

8. Palier (1) selon l'une quelconque des revendications 2 à 7,
**caractérisé en ce que**
dans le canal de montage entre le boîtier et la douille de montage (4) est prévue une première pièce coulissante (24) en particulier cylindrique creuse, la première pièce coulissante (24) présentant en particulier une première saillie de pièce coulissante avec laquelle elle est disposée dans une première partie de l'élargissement du canal de montage pour fixer une position de la première pièce coulissante (24) par rapport au boîtier le long de l'axe de montage (Y), une deuxième pièce coulissante (34) étant prévue en particulier dans le canal de montage le long de l'axe de montage (Y) de manière décalée par rapport à la première pièce coulissante (24), laquelle présente en particulier une deuxième saillie de pièce coulissante avec laquelle elle est disposée dans une deuxième partie de l'élargissement du canal de montage pour définir une position de la deuxième partie coulissante (34) par rapport au boîtier le long de l'axe de montage (Y).

9. Palier (1) selon les revendications 3 et 8,
**caractérisé en ce que**
la première pièce coulissante (24) est disposée dans une première partie du canal de montage formée par la première partie de boîtier (2) et la deuxième pièce coulissante (34) est disposée dans une deuxième partie du canal de montage formée par la deuxième partie de boîtier (3).

10. Palier (1) selon l'une quelconque des revendications précédentes,
**caractérisé en ce que**
les éléments de glissement (7) entourent l'axe longitudinal du passage avec un angle d'encerclement d'au moins 220°, en particulier d'au moins 240°.

11. Palier (1) selon l'une des revendications précédentes, **caractérisé en ce que** le passage entoure complètement l'axe longitudinal (X) perpendiculairement à la direction longitudinale sur un angle d'au moins 220°, en particulier d'au moins 240°, et présente, sur un côté tourné perpendiculairement à la direction longitudinale, une ouverture continue dans la direction longitudinale.

12. Palier (1) selon l'une quelconque des revendications précédentes,
**caractérisé en ce que**
les éléments de glissement (7) présentent des rainures s'étendant dans la direction longitudinale.

13. Palier (1) selon l'une quelconque des revendications précédentes,
**caractérisé en ce que**
les axes des rouleaux (9) s'étendent parallèlement à l'axe de montage (Y).

14. Palier selon l'une quelconque des revendications précédentes,
**caractérisé en ce que**
les éléments glissement (7) sont fabriqués à partir d'un polymère tribologique et/ou le boîtier est fabriqué à partir d'un métal ou d'un alliage métallique, en particulier par moulage sous pression.

15. Agencement de palier comprenant un palier (1) selon l'une quelconque des revendications précédentes ainsi qu'un rail avec une section de guidage (61) conçue à la manière d'un cylindre, la section de guidage (61) étant disposée de manière à pouvoir coulisser dans le sens longitudinal dans le passage du palier (1) et s'appuyant perpendiculairement au sens longitudinal contre les deux rouleaux (8) et étant espacée des éléments de glissement (7) perpendiculairement au sens longitudinal de moins de 0,5 mm, en particulier de moins de 0,2 mm.

16. Agencement de palier selon la revendication 15, comprenant un autre palier (1) selon l'une des revendications 1 à 14, les paliers (1) étant disposés les uns à côté des autres dans le sens longitudinal et la section de guidage (61) étant disposée dans les passages des deux paliers (1) et les paliers (1) étant fixés à un élément de construction par l'intermédiaire d'un boulon de montage (4) disposé dans son canal de montage respectif et/ou d'une douille de montage (4) disposée dans son canal de montage respectif.

17. Utilisation d'un palier (1) selon l'une des revendications 1 à 14, dans lequel un boulon de montage et/ou une douille de montage (4) est guidé à travers le canal de montage et est fixé de manière positionnellement fixe et rotative autour de l'axe de montage par rapport au boîtier du palier (1), une section de guidage (61) en forme de cylindre d'un rail étant introduite dans le canal de réception le long de la direction longitudinale en s'appuyant contre les rouleaux (8) sous rotation des rouleaux (8) autour les axes de rouleaux (9).

18. Utilisation selon la revendication 17, le palier (1) étant ensuite déplacé par rapport au rail dans le sens longitudinal, une force étant alors exercée entre le palier (1) et le rail qui fait tourner le palier (1) autour du boulon de montage et/ou de la douille de montage (4) et presse la section de guidage (61) contre au moins l'un des éléments de glissement (7) et la fait coulisser dans le sens longitudinal en appuyant contre celui-ci, tout en s'appuyant simultanément contre au moins l'un des rouleaux (8) et ledit au moins un rouleau (8) en tournant autour de son axe de rouleau (9).
